# EUROPEAN PATENT SPECIFICATION

(11) **EP 4 356 067 B1**
(45) Date of publication and mention of the grant of the patent: **15.04.2026**
(21) Application number: 22733974.4
(22) Date of filing: 20.06.2022
(51) Int. Cl.: G01B 11/25, B60Q 1/00, B60Q 1/24, G06T 7/50, G06T 7/521, G06T 7/62, G06T 7/70, G06V 10/82, G06V 10/141, G06V 10/145, G06V 20/58, G06V 20/56, B60W 40/06, B60W 60/00

(54) **METHOD FOR DETECTING AN OBJECT IN A ROAD SURFACE, METHOD FOR AUTONOMOUS DRIVING AND AUTOMOTIVE LIGHTING DEVICE**
VERFAHREN ZUR ERKENNUNG EINES OBJEKTS IN EINER STRASSENOBERFLÄCHE, VERFAHREN ZUM AUTONOMEN FAHREN UND KRAFTFAHRZEUGBELEUCHTUNGSVORRICHTUNG
PROCÉDÉ DE DÉTECTION D'OBJET SUR UNE SURFACE DE ROULEMENT, PROCÉDÉ DE CONDUITE AUTONOME ET DISPOSITIF D'ÉCLAIRAGE AUTOMOBILE

(30) Priority: 18.06.2021 FR 2106513
(43) Date of publication of application: 24.04.2024
(73) Proprietor: VALEO VISION, 93012 Bobigny Cedex (FR)
(72) Inventor: MIMOUN, Mickael, 93012 Bobigny Cedex (FR)
(74) Representative: Valeo Visibility
(86) International application number: PCT/EP2022/066770
(87) International publication number: WO 2022/263684

(56) References cited:
- US-A1- 2009 309 710
- US-A1- 2015 160 003
- US-A1- 2016 378 117

## Description

This invention is related to the field of automotive luminous devices, and more particularly, to the ones used in autonomous driving conditions.

Autonomous driving is being developed to provide vehicles which are capable of sensing their environment and moving safely with a reduced human input.

To achieve this goal, these autonomous vehicles combine a variety of sensors to perceive their surroundings. Advanced control systems receive the sensors data and provide a construction of the surroundings of the vehicle to identify appropriate navigation paths, as well as obstacles and relevant signalling.

A classification system with six levels, ranging from fully manual to fully automated systems, was published in 2014 by SAE International, an automotive standardization body, as J3016. This classification is based on the amount of driver intervention and attentiveness required, rather than the vehicle's capabilities, although these are loosely related. In 2016, SAE updated its classification, called J3016_201609.

In Level 3 of this classification, the driver can safely turn their attention away from the driving tasks, e.g. the driver can text or watch a movie. The vehicle will handle situations that call for an immediate response, like emergency braking. The driver must still be prepared to intervene within some limited time, specified by the manufacturer, when called upon by the vehicle to do so. A method and a system for detecting obstacles in a road surface from an automotive vehicle is described in US 2009/309710 A1. In this document, a pattern is projected from the headlamp or from the reverse light of said vehicle, edge extraction of the obstacle border is performed and an image is displayed to a user.

Luminous performance of lighting devices are essential for the sensors to receive all the relevant information necessary to achieve this driving mode, especially at night.

The present invention provides a solution for this problem by means of a method for detecting an object in a road surface as defined in claim 1.

In this method, a lighting device, which is a headlamp or a reverse light of an automotive vehicle, projects a light pattern on the road surface where the object is intended to be detected. This pattern comprises dark and lighted groups of square pixels, similar to the structure of a QR code (Quick Response code). An image device, such as a camera, acquires the image of the road illuminated by this light pattern. When a debris object is present in this image, acquired by the image device, this debris object causes a deformation in the pixel groups of the light pattern. This deformation is easily identifiable, since the processing unit which analyses the image has information about the original light pattern projected by the lighting device. The shape and dimensions of the deformed portion are used to provide information about the detected object and its importance. Thus, this lighting method can be used as an aid to night autonomous driving, thus improving safety and accuracy in the object detection.

According to the invention, the method further comprises the step of increasing the luminous intensity of the light pattern or changing the colours of at least some of the groups of square pixels when an object is detected. It is therefore possible to have a first luminous intensity level with monochrome light for standard lighting (to save energy) and then, when the object is detected, to increase the luminous intensity or introduce a colour code for a better accuracy of the processing unit when analysing the acquired image.

In some particular embodiments, some groups of square pixels contain specific information about the dimensions of the object.

In these cases, if the acquired image contains a deformed version of these groups of square pixels, the processing unit is able to quickly identify that the object is wider than a predetermined threshold or higher than a predetermined threshold.

In some particular embodiments, the comparison provides at least one disparity value, which reveals some features of the object.

The processing unit may, in these cases, actively look for specific data of the acquired image, in order to quickly find disparity values between the acquired version and the original version of the light pattern. Disparity values may comprise the shape and size of a particular pixel group or the angle that the contours form with respect to a predetermined direction.

In some particular embodiments, the light groups are lighted in coloured light.

The use of different colours in the pixel groups helps the processing unit when comparing the shape and position of these pixel groups in the acquired image with respect to the original pattern.

The method may be used for lighting the road ahead or behind the vehicle, like in a parking operation or in any other reverse manoeuvring.

In some particular embodiments, the features of the object comprises the position, the width and/or the height of the object.

These features are useful for assessing the relevance of the detected object, in order to decide the best decision possible.

In some particular embodiments, the method further comprises the step of defining the size and/or shape of the groups of square pixels as a function of a desired detection range.

Depending on the resolution of the light module and the desired accuracy in the detection of the obstacles, the size and shape of the pixel groups may be chosen.

In some particular embodiments,
- the method comprises a first step of providing the lighting device with a labelled database of debris objects, wherein the database contains objects with different sizes, materials, shapes, orientations and shadows;
- the step of using the comparison between the shape and position of the groups of square pixels in the acquired image and in the original pattern to obtain information about features of an object is carried out by a machine learning process; and
- the machine learning process includes a pre-processing of the images, which includes an image equalization to enhance the contrast between the lighted pixels and the dark pixels.

The image equalization improves the contrast, thus boosting the learning process.

In a second inventive aspect, the invention provides a method for autonomous managing of a vehicle, comprising the steps of
- performing the detection of an object with a method according to the first inventive aspect;
- using the obtained features of the object to decide a suitable vehicle manoeuvre;
- checking if the vehicle manoeuvre can be performed in security conditions; and
- performing the manoeuvre.

The method for detecting an object may be used for a method for the autonomous driving of a vehicle. When the object is detected, the detection method provides the necessary features that allow the adoption of a correct manoeuvre to avoid collision.

In a further inventive aspect, the invention provides an automotive lighting device comprising
- a plurality of solid-state light sources, configured to project the light pattern in a method according to a previous inventive aspect;
- an image sensor configured to acquire an image of the projected light pattern in a method according to a previous inventive aspect; and
- processing unit configured to perform the rest of the steps of a method according to a previous inventive aspect.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/ bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

A matrix arrangement is a typical example for this method. The rows may be grouped in projecting distance ranges and each column of each group represent an angle interval. This angle value depends on the resolution of the matrix arrangement, which is typically comprised between 0.01° per column and 0.5° per column. As a consequence, many light sources may be managed at the same time.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[Fig.1] shows a general perspective view of an automotive lighting device according to the invention.
[Fig.2] some steps of the operation of such an automotive lighting device.

In these figures, the following reference numbers are used for each of the following elements:
1 Headlamp
2 LEDs
3 Control unit
4 Camera
5 Road surface
6 Image pattern
7 Group of light pixels
8 Zone with disparity values
9 Height group
10 Width group
100 Automotive vehicle

The example embodiments are described in sufficient detail to enable those of ordinary skill in the art to embody and implement the systems and processes herein described. It is important to understand that embodiments can be modified in various ways as long as they fall within the scope of protection defined by the appended claims, specific embodiments thereof are shown in the drawings and described in detail below as examples.

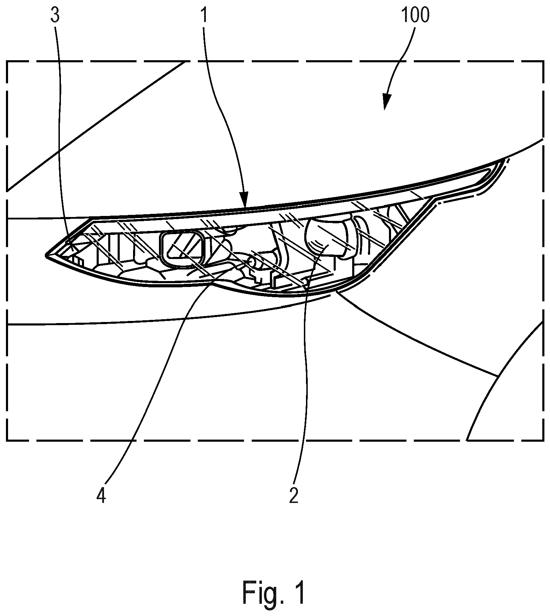

[Fig.1] shows a general perspective view of an automotive lighting device according to the invention.

This headlamp 1 is installed in an automotive vehicle 100 and comprises
- a matrix arrangement of LEDs 2, intended to provide a light pattern;
- a control unit 3 to perform a control of the operation of the LEDs 2; and
- a camera 4 intended to provide some external data.

This matrix configuration is a high-resolution module, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixelated light beam by the matrix arrangement. The control centre is thus able to individually control the light emission of each pixel of the matrix arrangement.

Alternatively to what has been presented above, the matrix arrangement may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

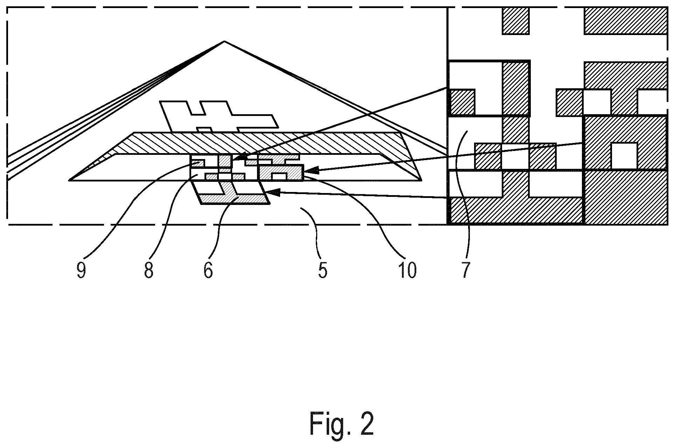

[Fig.2] shows some steps of the operation of such an automotive lighting device. In this figure, a light pattern 6 is shown projected on the road surface 5. This light pattern 6 comprises a plurality of groups of light pixels 7. Each of these groups comprises a plurality of black or white pixels, so that the final pattern looks like a QR code.

Each 0.2 seconds, the camera of the lighting device acquires image data of the projected light pattern 6. When an object is present on the road surface 5, the acquired image data contains a zone 8 where the shape and/or size of some of these light groups is different than expected in the original pattern, due to the fact that is projected over a surface (the surface of an object) which forms an angle with respect to the road, and the acquired image is deformed.

At this stage, there are two options. First one is analysing the image as such and second one is modifying the light pattern for a better identification of the object, increasing the luminous intensity of the lighted pixels, or even introducing some colour code for a better data processing.

In any case, the processing unit receives the acquired image with the deformed zone, either with standard luminous intensity or with a modified one.

After this reception, the processing unit performs an image analysis to identify the disparity values of the acquired image with respect to the original light pattern. When they are identified, the zone where these disparity values are found is categorized as an object, so that its position and dimensions may be obtained.

At these stages, there are different methods for the processing unit to analyse the shadow.

First optional stage comprises performing an image equalization, to enhance the contrast between the lighted pixels and the black ones. This enhanced contrast will be useful for the processing unit, for a better identification and quantification of the object zone.

Second optional stage is the use of machine learning. The processing unit may undergo a supervised learning process before being installed in the automotive vehicle. This comprises the fact that a database of debris objects is provided within a preliminary training stage.

The processing unit comprises a convolutional neural network with some convolutional blocks, each convolutional block comprising several convolutional layers and a max pool layer, which operate on the input (the image from the database). The output of this process will lead to recognize the code, then to obtain the dimensions of the object zone according to the defined code.

An alternative arrangement of a convolutional neural network may comprise some convolutional layers, which operate on the input (the image from the database). This network comprises skip connections to propagate input features faster through residual connections. This network also comprises a final fully-connected layer.

One operational example means that, since objects present in the images are limited, the network learns to classify a provided code within a predefined set of surfaces range. The task is that the network estimates the surface as if it was a probability function.

However, in some cases, as the one shown in this figure, some of the groups of light pixels are arranged to provide specific information about the object. One specific group 10 indicates that the width of the object is at least equal to a predetermined threshold, so the vehicle cannot pass close to it without a steering manoeuvre. Other specific group 9 indicates that the height of the object is at least equal to a predetermined threshold, so the vehicle cannot pass over the object without being damaged. In these cases, if the acquired image contains a deformed version of these groups of square pixels, the processing unit is able to quickly identify that the object is wider than a predetermined threshold or higher than a predetermined threshold, so a particular manoeuvre is needed.

This invention may also be used in different situations: the light may be projected by the headlamp, but it may also be projected by a rear lamp, such as a reverse light. This example would be useful, e.g., when parking the car, and an accurate map of the obstacles surrounding the vehicle would be needed for an autonomous operation.

This invention may also be used when dealing with the object. The processing unit, once that has detected and identified the presence, position, orientation and size of the object, decides the best way of overcoming it: either by changing the lane, or by decreasing the speed, or even by totally stopping the vehicle. Autonomous driving steps are performed according to the invention for the most suitable operation that avoids being damaged by the object. However, sometimes, it has to check if this manoeuvre is possible (because there are no nearby vehicles) before performing it.

## Claims

1. Method for detecting an object in a road surface from an automotive vehicle, the method comprising the steps of:
- defining a light pattern comprising dark and lighted groups (7) of square pixels;
- projecting the light pattern on a road surface, wherein the light pattern is projected by a headlamp (1) or by a reverse light of said automotive vehicle;
- acquiring an image of the projected light pattern;
- comparing, by a control unit (3), the shape and position of certain groups (8) of square pixels in the acquired image with respect to an original light pattern; and
- using the comparison to infer, by the control unit (3), features of an object;
- increasing, by the control unit (3), the luminous intensity of the light pattern or changing the colours of at least some of the groups of square pixels when an object is detected using said comparison.

2. Method according to claim 1, wherein the comparison provides at least one disparity value, which reveals some features of the object.

3. Method according to any of the preceding claims, wherein some groups of square pixels contain specific information about the dimensions of the object.

4. Method according to any of the preceding claims, wherein the light groups (7) are lighted in coloured light.

5. Method according to any of the preceding claims, wherein the features contain the position, the width and/or the height of the object.

6. Method according to any of the preceding claims, further comprising the step of defining the size and/or shape of the groups of square pixels as a function of a desired detection range.

7. Method according to any of the preceding claims, wherein
- the method comprises a first step of providing the lighting device with a labelled database of debris objects, wherein the database contains objects with different sizes, materials, shapes, orientations and shadows;
- the step of using the comparison between the shape and position of the groups of square pixels in the acquired image and in the original pattern to obtain information about features of an object is carried out by a machine learning process; and
- the machine learning process includes a pre-processing of the images, which includes an image equalization to enhance the contrast between the lighted pixels and the dark pixels.

8. Method for autonomous managing of a vehicle, comprising the steps of
- performing the detection of an object with a method according to any of the preceding claims;
- use the obtained features of the object to decide a suitable vehicle manoeuvre;
- check if the vehicle manoeuvre can be performed in security conditions; and
- perform the manoeuvre.

9. Automotive headlamp or reverse light comprising
- a plurality of solid-state light sources (2), configured to project the light pattern in a method according to any of the preceding claims;
- an image sensor (4) configured to acquire an image of the projected light pattern in a method according to any of the preceding claims; and
- processing unit (3) configured to perform the rest of the steps of a method according to any of the preceding claims.

## Patentansprüche

1. Verfahren zum Erkennen eines Objekts auf einer Straßenoberfläche von einem Kraftfahrzeug aus, wobei das Verfahren die folgenden Schritte umfasst:
- Definieren eines Lichtmusters, das dunkle und beleuchtete Gruppen (7) von quadratischen Pixeln umfasst;
- Projizieren des Lichtmusters auf eine Straßenoberfläche, wobei das Lichtmuster durch einen Scheinwerfer (1) oder durch ein Rückfahrlicht des Kraftfahrzeugs projiziert wird;
- Erfassen eines Bildes des projizierten Lichtmusters;
- Vergleichen, durch eine Steuereinheit (3), der Form und Position bestimmter Gruppen (8) von quadratischen Pixeln im erfassten Bild in Bezug auf ein ursprüngliches Lichtmuster; und
- Verwenden des Vergleichs, um durch die Steuereinheit (3) Merkmale eines Objekts abzuleiten;
- Erhöhen, durch die Steuereinheit (3), der Lichtintensität des Lichtmusters oder Ändern der Farben von mindestens einigen der Gruppen von quadratischen Pixeln, wenn ein Objekt unter Verwendung des Vergleichs erkannt wird.

2. Verfahren nach Anspruch 1, wobei der Vergleich mindestens einen Disparitätswert liefert, der einige Merkmale des Objekts offenbart.

3. Verfahren nach einem der vorhergehenden Ansprüche, wobei einige Gruppen von quadratischen Pixeln spezifische Informationen über die Abmessungen des Objekts enthalten.

4. Verfahren nach einem der vorhergehenden Ansprüche, wobei die Lichtgruppen (7) in farbigem Licht beleuchtet werden.

5. Verfahren nach einem der vorhergehenden Ansprüche, wobei die Merkmale die Position, die Breite und/oder die Höhe des Objekts enthalten.

6. Verfahren nach einem der vorhergehenden Ansprüche, weiter umfassend den Schritt des Definierens der Größe und/oder Form der Gruppen von quadratischen Pixeln als Funktion eines gewünschten Erkennungsbereichs.

7. Verfahren nach einem der vorhergehenden Ansprüche, wobei
- das Verfahren einen ersten Schritt des Bereitstellens der Beleuchtungsvorrichtung mit einer beschrifteten Datenbank von Schuttobjekten umfasst, wobei die Datenbank Objekte mit unterschiedlichen Größen, Materialien, Formen, Ausrichtungen und Schatten enthält;
- der Schritt des Verwendens des Vergleichs zwischen der Form und Position der Gruppen von quadratischen Pixeln im erfassten Bild und im ursprünglichen Muster, um Informationen über Merkmale eines Objekts zu erhalten, durch einen maschinellen Lernprozess durchgeführt wird; und
- der maschinelle Lernprozess eine Vorverarbeitung der Bilder beinhaltet, die eine Bildausgleichung umfasst, um den Kontrast zwischen den beleuchteten Pixeln und den dunklen Pixeln zu verbessern.

8. Verfahren zum autonomen Steuern eines Fahrzeugs, umfassend die Schritte:
- Durchführen der Erkennung eines Objekts mit einem Verfahren nach einem der vorhergehenden Ansprüche;
- Verwenden der erhaltenen Merkmale des Objekts, um ein geeignetes Fahrzeugmanöver zu entscheiden;
- Überprüfen, ob das Fahrzeugmanöver unter Sicherheitsbedingungen durchgeführt werden kann; und
- Durchführen des Manövers.

9. Kraftfahrzeugscheinwerfer oder Rückfahrlicht, umfassend
- eine Vielzahl von Festkörperlichtquellen (2), die konfiguriert sind, das Lichtmuster in einem Verfahren nach einem der vorhergehenden Ansprüche zu projizieren;
- einen Bildsensor (4), der konfiguriert ist, ein Bild des projizierten Lichtmusters in einem Verfahren nach einem der vorhergehenden Ansprüche zu erfassen; und
- eine Verarbeitungseinheit (3), die konfiguriert ist, die übrigen Schritte eines Verfahrens nach einem der vorhergehenden Ansprüche durchzuführen.

## Revendications

1. Méthode pour détecter un objet sur une surface routière depuis un véhicule automobile, la méthode comprenant les étapes suivantes :
- définir un motif lumineux comprenant des groupes (7) sombres et éclairés de pixels carrés ;
- projeter le motif lumineux sur une surface routière, où le motif lumineux est projeté par un phare (1) ou par un feu de recul dudit véhicule automobile ;
- acquérir une image du motif lumineux projeté ;
- comparer, par une unité de contrôle (3), la forme et la position de certains groupes (8) de pixels carrés dans l'image acquise par rapport à un motif lumineux original ; et
- utiliser la comparaison pour déduire, par l'unité de contrôle (3), des caractéristiques d'un objet ;
- augmenter, par l'unité de contrôle (3), l'intensité lumineuse du motif lumineux ou changer les couleurs d'au moins certains des groupes de pixels carrés lorsqu'un objet est détecté en utilisant ladite comparaison.

2. Méthode selon la revendication 1, dans laquelle la comparaison fournit au moins une valeur de disparité, qui révèle certaines caractéristiques de l'objet.

3. Méthode selon l'une quelconque des revendications précédentes, dans laquelle certains groupes de pixels carrés contiennent des informations spécifiques sur les dimensions de l'objet.

4. Méthode selon l'une quelconque des revendications précédentes, dans laquelle les groupes lumineux (7) sont éclairés en lumière colorée.

5. Méthode selon l'une quelconque des revendications précédentes, dans laquelle les caractéristiques contiennent la position, la largeur et/ou la hauteur de l'objet.

6. Méthode selon l'une quelconque des revendications précédentes, comprenant en outre l'étape de définir la taille et/ou la forme des groupes de pixels carrés en fonction d'une plage de détection souhaitée.

7. Méthode selon l'une quelconque des revendications précédentes, dans laquelle
- la méthode comprend une première étape de fourniture au dispositif d'éclairage d'une base de données étiquetée d'objets débris, où la base de données contient des objets de différentes tailles, matériaux, formes, orientations et ombres ;
- l'étape d'utilisation de la comparaison entre la forme et la position des groupes de pixels carrés dans l'image acquise et dans le motif original pour obtenir des informations sur les caractéristiques d'un objet est réalisée par un processus d'apprentissage automatique ; et
- le processus d'apprentissage automatique comprend un prétraitement des images, qui inclut une égalisation d'image pour améliorer le contraste entre les pixels éclairés et les pixels sombres.

8. Méthode pour la gestion autonome d'un véhicule, comprenant les étapes de
- effectuer la détection d'un objet avec une méthode selon l'une quelconque des revendications précédentes ;
- utiliser les caractéristiques obtenues de l'objet pour décider d'une manœuvre de véhicule appropriée ;
- vérifier si la manœuvre du véhicule peut être effectuée dans des conditions de sécurité ; et
- effectuer la manœuvre.

9. Phare automobile ou feu de recul comprenant
- une pluralité de sources lumineuses à semi-conducteurs (2), configurées pour projeter le motif lumineux dans une méthode selon l'une quelconque des revendications précédentes ;
- un capteur d'image (4) configuré pour acquérir une image du motif lumineux projeté dans une méthode selon l'une quelconque des revendications précédentes ; et
- une unité de traitement (3) configurée pour effectuer le reste des étapes d'une méthode selon l'une quelconque des revendications précédentes.
